(19) Europäisches Patentamt
European Patent Office
Office européen des brevets

(11) EP 2 570 450 A1

(12) EUROPÄISCHE PATENTANMELDUNG

(43) Veröffentlichungstag:
**20.03.2013 Patentblatt 2013/12**

(21) Anmeldenummer: **11181294.7**

(22) Anmeldetag: **14.09.2011**

(51) Int Cl.:
***C08J 3/24*** (2006.01) ***C09J 163/00*** (2006.01)
***C09J 9/00*** (2006.01) *C08L 101/10* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Sika Technology AG**
**6340 Baar (CH)**

(72) Erfinder:
- **Xu-Rabl, Rui**
  **8049 Zürich (CH)**
- **Gössi, Matthias**
  **8610 Uster (CH)**
- **Finter, Jürgen**
  **8037 Zürich (CH)**

(74) Vertreter: **Sika Patent Attorneys**
**c/o Sika Technologies AG**
**Tüffenwies 16-22**
**8048 Zürich (CH)**

(54) **Formgedächtnis-Material auf Basis eines Strukturklebstoffs**

(57) Die vorliegende Erfindung betrifft eine Zusammensetzung umfassend

- mindestens einen härtbaren Strukturklebstoff, sowie
- mindestens ein chemisch vernetztes Elastomer auf der Basis eines silanfunktionellen Polymers, wobei das Elastomer insbesondere als durchdringendes Polymernetzwerk im Strukturklebstoff vorliegt.

Eine derartige Zusammensetzung stellt ein sogenanntes Formgedächtnis-Material dar und eignet sich zur Verstärkung von Hohlräumen in strukturellen Bauteilen, wie beispielsweise in Automobilkarosserien.

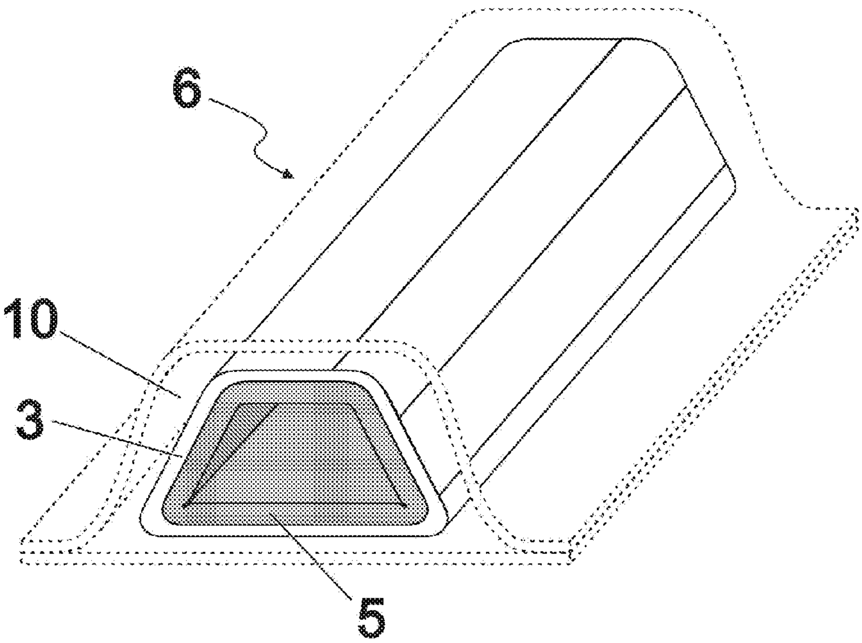


Figur 5

EP 2 570 450 A1

## Beschreibung

### Technisches Gebiet

Die Erfindung liegt auf dem Gebiet der Zusammensetzungen umfassend härtbare Strukturklebstoffe, welche als so genannte Formgedächtnis-Materialien ausgebildet sind. Weiterhin betrifft die Erfindung ein Verstärkungselement zur Verstärkung in Hohlräumen von strukturellen Bauteilen, wie sie beispielsweise bei Automobilkarosserien und dergleichen eingesetzt werden.

### Stand der Technik

Oftmals werden bei Konstruktionen jeglicher Art hohlräumige strukturelle Bauteile eingesetzt. Diese Bauweise erlaubt es, das Gewicht der Konstruktion und den Materialaufwand niedrig zu halten, jedoch gehen bei dieser Bauweise häufig auch Stabilität und Festigkeit verloren. Die Hohlräume bieten zudem, aufgrund der grösseren Oberfläche des hohlen Bauteils, eine grössere Angriffsfläche für Korrosion, falls Feuchtigkeit oder Schmutz in sie eindringt. Ebenfalls können Geräusche, die beispielsweise durch Wind oder Vibrationen verursacht werden, in oder entlang der Hohlräume übertragen werden.

Aufgrund der Form und/oder des engen Ausmasses solcher Hohlräume ist es vielfach schwierig diese effizient zu verstärken, abzudichten oder die Geräuschübertragung einzudämmen.

Insbesondere um die mechanischen Eigenschaften hohlräumiger struktureller Bauteile zu verbessern, ist es weitgehend üblich, lokale Verstärkungselemente in die Bauteile einzusetzen oder einzubauen. Derartige Verstärkungselemente bestehen typischerweise aus Metallen oder Kunststoffen oder aus Kombinationen dieser Werkstoffe. An schwer zugänglichen Stellen, welche beispielsweise erst nach der Montage des Bauteils verstärkt oder abgedichtet werden sollen, werden häufig auch Strukturschäume eingesetzt. Dies ist etwa bei der Herstellung von Fahrzeugstrukturen bzw. Karosserien, der Fall. Der Vorteil der Strukturschäume ist, dass sie im nicht expandierten Zustand in einem Hohlraum montiert werden können und später, vor allem durch Temperaturerhöhung geschäumt werden können. So kann beispielsweise die Innenwand des Hohlraums auch nach der Montage des Verstärkungselements mittels kathodischer Tauchlackierung (KTL) vollständig beschichtet und erst danach durch Schäumung des Strukturklebstoffs verstärkt werden. Die Schäumung erfolgt dabei typischerweise während der Härtung der KTL-Schicht im Ofen.

Der Nachteil derartiger Verstärkungselemente ist, dass die mechanischen Eigenschaften des Strukturklebstoffs mit dem Schäumungsvorgang beeinträchtigt werden.

### Darstellung der Erfindung

Die Aufgabe der vorliegenden Erfindung ist es daher, ein Verstärkungselement zur Verfügung zu stellen, welcher die Nachteile des Standes der Technik überwindet und es erlaubt, beispielsweise einen Spalt zwischen Hohlraum und Verstärkungselement zu schliessen, ohne dass dabei die mechanischen Eigenschaften des Strukturklebstoffs beeinträchtigt werden.

Überraschenderweise wurde gefunden, dass mit Zusammensetzungen gemäss Anspruch 1 diese Aufgabe gelöst werden kann.

Es wurde gefunden, dass sich mit erfindungsgemässen Zusammensetzungen Formgedächtnis-Materialien realisieren lassen, welche insbesondere durch Temperatureinfluss ihre Form ändern und somit in eine gewünschte Richtung expandieren, ohne dass dabei eine Volumenzunahme, beispielsweise durch einen Schäumungsvorgang, einhergeht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:

- Figur 1 eine schematische Darstellung der Herstellung eines Formkörpers bzw. einer Zusammensetzung in ihrer temporären Form;
- Figur 2 eine schematische Darstellung Verstärkungselements;
- Figur 3 eine schematische Darstellung der Formänderung und Aushärtung der Zusammensetzung;

Figur 4 eine schematische Darstellung der Verstärkung eines Hohlraums eines strukturellen Bauteils;
Figur 5 eine schematische Darstellung eines Verstärkungselements in einem Hohlraum eines strukturellen Bauteils;
Figur 6 eine schematische Darstellung eines verstärkten strukturellen Bauteils.

In den Figuren sind nur die für das unmittelbare Verständnis der Erfindung wesentlichen Elemente gezeigt.

**Wege zur Ausführung der Erfindung**

Die vorliegende Erfindung betrifft in einem ersten Aspekt eine Zusammensetzung umfassend

- mindestens einen härtbaren Strukturklebstoff; sowie
- mindestens ein chemisch vernetztes Elastomer auf der Basis eines silanfunktionellen Polymers.

Das chemisch vernetzte Elastomer liegt dabei bevorzugt als durchdringendes Polymernetzwerk im Strukturklebstoff vor.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst wieterhin auch so genannte Prepolymere, das heisst reaktive oligomere Voraddukte, deren funktionelle Gruppen am Aufbau von Makromolekülen beteiligt sind. Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen). Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine $NH_2$-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Molekulargewicht" versteht man im vorliegenden Dokument stets das Molekulargewichtsmittel $M_n$ (Zahlenmittel).

Der Term "durchdringendes Polymernetzwerk" wird im vorliegenden Dokument in Anlehnung an die Definition eines "Semi-interpenetrierenden Polymernetzwerks" (semi-interpenetrating polymer network (SIPN)) gemäss IUPAC Compendium of Chemical Terminology, 2nd Edition (1997) verwendet. Demnach umfasst das SIPN mindestens ein Netzwerk sowie mindestens ein lineares oder verzweigtes Polymer, wobei dieses Polymer das Netzwerk zumindest teilweise durchdringt. In der erfindungsgemässen Zusammensetzung bildet das Elastomer das Netzwerk, das Polymer ist Bestandteil des härtbaren Strukturklebstoffs.

Als "chemisch vernetztes Elastomer" wird im vorliegenden Dokument ein Elastomer verstanden, welches über kovalente chemische Bindungen vernetzt ist. Im Gegensatz dazu basiert die Vernetzung eines thermoplastischen Elastomers auf physikalischen Wechselwirkungen. Ein chemisch vernetztes Elastomer unterscheidet sich dadurch von einem thermoplastischen Elastomer, dass es in einem geeigneten Lösungsmittel zwar quillt, jedoch nicht gelöst wird.

Ein thermoplastisches Elastomer löst sich hingegen vollständig in einem geeigneten Lösungsmittel.

Das Vorliegen eines chemisch vernetzten Elastomers lässt sich beispielsweise in Anlehnung an ASTM D 2765 bestimmen.

Als Glasübergangstemperatur Tg einer Zusammensetzung wird im vorliegendem Dokument die Glasübergangstemperatur des härtbaren Strukturklebstoffs, also insbesondere des Epoxidharzes **A**, oder die Glasübergangstemperatur des chemisch vernetzten Elastomers verstanden, je nachdem welche der beiden höher liegt. Bei Ausführungsformen mit einem härtbaren Strukturklebstoff auf Basis eines Epoxid-Festharzes bezieht sich die Glasübergangstemperatur Tg der Zusammensetzung in der Regel auf die Glasübergangstemperatur Tg des Epoxid-Festharzes. Bei Ausführungsformen mit einem härtbaren Strukturklebstoff auf Basis eines Epoxid-Flüssigharzes bezieht sich die Glasübergangstemperatur Tg der Zusammensetzung in der Regel auf die Glasübergangstemperatur Tg des chemisch vernetzten Elastomers.

Die Glasübergangstemperatur Tg sowie Schmelzpunkte werden typischerweise mittels DSC (Differential Scanning Calorimetry) gemessen, wobei die Messungen mit einem Gerät Mettler Toledo 822e bei einer Heizrate von 10°C/min bis 180°C an 5 mg Proben erfolgen. Die Messwerte werden mit Hilfe der DSC-Software aus der gemessenen DSC-Kurve bestimmt.

Die erfindungsgemässe Zusammensetzung, welche ein "Formgedächtnis-Material" ("shape memory material") darstellt, kann bei ihrer Herstellung oder Verarbeitung in eine bestimmte Form ("ursprüngliche Form") gebracht werden und weist nach dieser Formgebung eine feste Konsistenz auf, das heisst, dass die Zusammensetzung bei einer Temperatur unterhalb ihrer Glasübergangstemperatur Tg vorliegt. In dieser Form liegt das chemisch vernetzte Elastomer, welches insbesondere als durchdringendes Polymernetzwerk im Strukturklebstoff vorliegt, im Wesentlichen entspannt vor. Bei Bedarf wird die Zusammensetzung dann auf eine Temperatur über ihre Glasübergangstemperatur Tg erwärmt und in eine beliebige Form ("temporäre Form") gebracht. In dieser temporären Form liegt das chemisch vernetzte Elastomer in einer gespannten Form vor. Die Zusammensetzung wird in dieser temporären Form gehalten und die Temperatur der Zusammensetzung wird wieder unter ihre Glasübergangstemperatur Tg gesenkt, wodurch sich die Zusammensetzung in der temporären Form verfestigt. In dieser temporären Form ist die Zusammensetzung lagerstabil und kann einer Verarbeitung, beispielsweise Stanzen oder Schneiden, unterzogen werden. Wird die Zusammensetzung zu einem späteren Zeitpunkt wieder auf eine Temperatur erwärmt, welche über ihrer Glasübergangstemperatur Tg liegt, bringt sich das Elastomer wieder in seine entspannte Form und verformt somit die gesamte Zusammensetzung in ihre ursprüngliche Form.

Somit betrifft die vorliegende Erfindung auch ein Formgedächtnis-Material umfassend eine erfindungsgemässe Zusammensetzung.

Insbesondere handelt es sich bei der erfindungsgemässen Zusammensetzung um ein Formgedächtnis-Material, welches bei Raumtemperatur (23°C) fest ist, was eine optimale Handhabung des Materials in seiner ursprünglichen und in seiner temporären Form erlaubt.

Damit die erfindungsgemässe Zusammensetzung bei Raumtemperatur fest ist, sollte sie eine Glasübergangstemperatur Tg, aufweisen, welche über der Raumtemperatur liegt. Ansonsten könnte die erfindungsgemässe Zusammensetzung, nachdem sie in ihre temporäre Form gebracht wurde, das in dieser temporären Form angespannte Elastomer, bei Raumtemperatur nicht in dieser Form halten.

Vorzugsweise weist die erfindungsgemässe Zusammensetzung eine Glasübergangstemperatur Tg im Bereich von 23°C bis 95°C, insbesondere von 30°C bis 80°C, bevorzugt von 35°C bis 75°C, auf.

Weiterhin bevorzugt ist die Oberfläche der erfindungsgemässen Zusammensetzung bei Raumtemperatur nicht klebrig, was ihre Handhabung erleichtert.

Beim härtbaren Strukturklebstoff handelt es sich insbesondere um einen hitzehärtenden Strukturklebstoff, welcher vorzugsweise eine Aushärtungstemperatur im Bereich von 120°C bis 220°C, insbesondere 160°C bis 200°C, aufweist.

Handelt es sich beim härtbaren Strukturklebstoff um einen hitzehärtenden Strukturklebstoff, muss bei der Verarbeitung der Zusammensetzung, bei welcher sie in ihre temporäre Form gebracht wird, darauf geachtet werden, dass die Zusammensetzung nicht soweit erwärmt wird, dass der Aushärtungsvorgang einsetzt.

Meist bevorzugt ist der härtbare Strukturklebstoff eine Epoxidharzzusammensetzung umfassend mindestens ein Epoxidharz **A** und mindestens einen Härter **B** für Epoxidharze, welcher durch erhöhte Temperatur aktiviert wird. Insbesondere handelt es sich dabei um eine einkomponentige Epoxidharzzusammensetzung.

Das Epoxidharz **A**, weist durchschnittlich mehr als eine Epoxidgruppe pro Molekül auf und ist insbesondere ein Epoxid-Festharz oder eine Mischung eines Epoxid-Festharzes mit einem Epoxid-Flüssigharz. Der Begriff "Epoxid-Festharz" ist dem Epoxid-Fachmann bestens bekannt und wird im Gegensatz zu "Epoxid-Flüssigharz" verwendet. Die Glasübergangstemperatur Tg von Festharzen liegt über Raumtemperatur.

Bevorzugte Epoxid-Festharze weisen die Formel (I) auf.

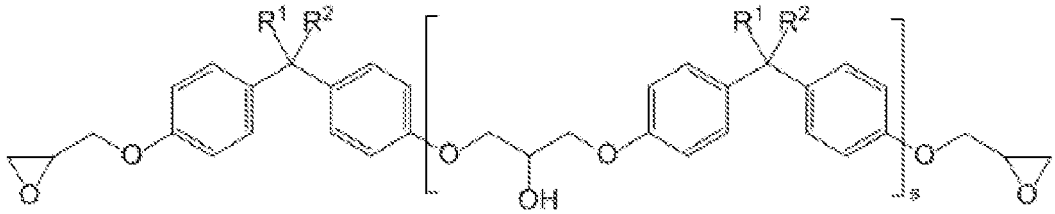

(I)

Hierbei stehen die Substituenten $R^1$ und $R^2$ unabhängig voneinander entweder für H oder $CH_3$. Weiterhin steht der Index s für einen Wert von ≥ 1, insbesondere von ≥ 1.5, bevorzugt von 2 bis 12.

Bevorzugte Epoxid-Festharze weisen eine Glasübergangstemperatur Tg im Bereich von 23°C bis 95°C, insbesondere von 30°C bis 80°C, bevorzugt von 35°C bis 75°C, auf.

Derartige Epoxid-Festharze sind beispielsweise kommerziell erhältlich von Dow Chemical Company, USA, von Huntsman International LLC, USA, oder von Hexion Specialty Chemicals Inc, USA.

Bevorzugte Epoxid-Flüssigharze, welche insbesondere zusammen mit einem Epoxid-Festharz verwendet werden können, weisen die Formel (II) auf.

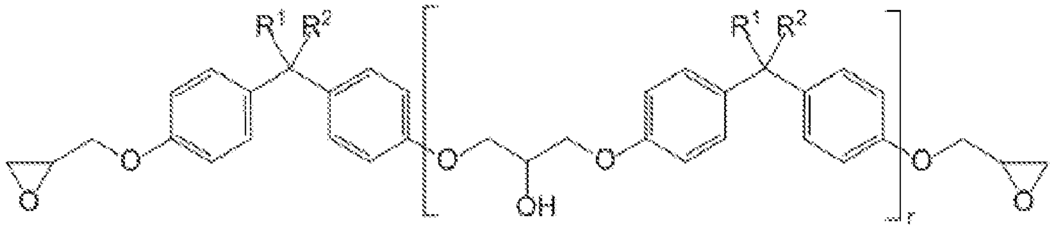

(II)

Hierbei stehen die Substituenten $R^1$ und $R^2$ wiederum unabhängig voneinander entweder für H oder $CH_3$. Weiterhin steht der Index r für einen Wert von 0 bis 1. Bevorzugt steht r für einen Wert von ≤ 0.2.

Es handelt sich somit vorzugsweise um Diglycidylether von Bisphenol-A (DGEBA), von Bisphenol-F sowie von Bisphenol-A/F. Die Bezeichnung "A/F" verweist hierbei auf eine Mischung von Aceton mit Formaldehyd, welche als Edukt bei dessen Herstellung verwendet wird. Solche Flüssigharze sind beispielsweise unter den Handelsnamen Araldite® GY 250, Araldite® PY 304, Araldite® GY 282 von Huntsman International LLC, USA, oder D.E.R.® 331 oder D.E.R.® 330 von Dow Chemical Company, USA, oder unter dem Handelsnamen Epikote® 828 oder Epikote® 862 von Hexion Specialty Chemicals Inc, USA, kommerziell erhältlich.

Je nach Ausführungsform kann es sich beim Epoxidharz, welches als eine der Ausgangsverbindungen in härtbaren Strukturklebstoff eingesetzt wird, auch um ein Epoxid-Flüssigharz handeln.

Weitere geeignete Epoxidharze sind sogenannte Novolake. Diese weisen insbesondere die folgende Formel (III) auf.

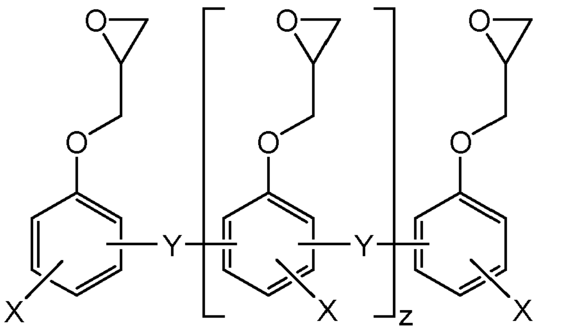

(III)

Dabei steht der Rest X für ein Wasserstoffatom oder für eine Methylgruppe. Der Rest Y steht für $-CH_2-$ oder für einen Rest der Formel (IV).

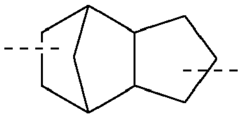 (IV)

Weiterhin steht der Index z für einen Wert von 0 bis 7, insbesondere für einen Wert von ≥ 3.

Insbesondere handelt es sich hierbei um Phenol- oder Kresol-Novolake (Y steht für -CH2-).

Derartige Epoxidharze sind unter dem Handelsnamen EPN oder ECN sowie Tactix® 556 von Huntsman International, LLC, USA, oder unter der Produktreihe D.E.N.™ von Dow Chemical Company, USA, kommerziell erhältlich.

Bevorzugt stellt das Epoxidharz **A** ein Epoxid-Festharz der Formel (I) dar. In einer ebenfalls bevorzugten Ausführungsform enthält die hitzehärtende Epoxidharzzusammensetzung sowohl mindestens ein Epoxid-Festharz der Formel (I) als auch mindestens ein Epoxid-Flüssigharz der Formel (II).

Der Anteil von Epoxidharz **A** beträgt vorzugsweise 2 bis 90 Gew.-%, insbesondere 5 bis 70 Gew.-%, bevorzugt 10 bis 60 Gew.-%, bezogen auf das Gesamtgewicht des härtbaren Strukturklebstoffs.

Der Härter **B** für Epoxidharze wird durch erhöhte Temperatur aktiviert. Bevorzugt handelt es sich beim Härter **B** um einen Härter, ausgewählt aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1, 1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), sowie Imidazole und Amin-Komplexe.

Besonders bevorzugt als Härter **B** ist Dicyandiamid, insbesondere in Kombination mit einem substituierten Harnstoff. Der Vorteil der Kombination von Dicyandiamid mit einem substituierten Harnstoff liegt in der dadurch erzielten beschleunigten Aushärtung der Zusammensetzung.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht des härtbaren Strukturklebstoffs.

Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter **B**, der Anteil der Härters **B** am gesamten härtbaren Strukturklebstoff im unteren Bereich des angegebenen Wertebereichs liegt.

Zusätzlich kann die Epoxidharzzusammensetzung mindestens einen Schlagzähigkeitsmodifikator umfassen.

Unter einem "Schlagzähigkeitsmodifikator" wird in diesem Dokument ein Zusatz eines organischen Polymers zu einer Epoxidharzmatrix verstanden, der bereits in geringen Mengen, d.h. von typischerweise zwischen 0.1 und 20 Gew.-% in Bezug auf den härtbaren Strukturklebstoff, eine deutliche Zunahme der Zähigkeit bewirkt und somit in der Lage ist, höhere Schlag- oder Stossbeanspruchung aufzunehmen, bevor die Matrix einreisst oder bricht.

Als Schlagzähigkeitsmodifikatoren eignen sich insbesondere reaktive Flüssigkautschuke auf Basis von Nitrilkautschuk oder Derivate von Polyetherpolyol-Polyurethanen, Core-Shell Polymere und ähnliche dem Fachmann bekannte Systeme.

Geeignete Schlagzähigkeitsmodifikatoren sind als Schlagzähigkeitsmodifikatoren **D** beschrieben in der europäischen Patentanmeldung mit der Anmeldenummer EP08168009.2, deren Inhalt hiermit durch Bezugnahme eingeschlossen wird.

Der härtbare Strukturklebstoff kann weitere Bestandteile enthalten, wie sie üblicherweise in härtbaren Strukturklebstoffen eingesetzt werden.

Insbesondere enthält der härtbare Strukturklebstoff zusätzlich mindestens einen Füllstoff. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint. Ein weiteres Beispiel sind funktionalisierte Alumoxane, wie sie z. B. in US 6,322,890 beschrieben sind und deren Inhalt hiermit durch Bezugnahme eingeschlossen wird.

Vorteilhaft beträgt der Anteil des Füllstoffs 1 bis 60 Gew.-%, vorzugsweise 5 bis 50 Gew.-%, insbesondere 10 bis 35 Gew.-%, bezogen auf das Gewicht des gesamten härtbaren Strukturklebstoffs.

Als weitere Bestandteile umfasst der härtbare Strukturklebstoff insbesondere auch Thixothropierungsmittel wie beispielsweise Aerosile oder Nanoclays, Zähigkeitsmodifikatoren, Reaktivverdünner sowie weitere dem Fachmann bekannte Bestandteile.

Typischerweise enthält die erfindungsgemässe Zusammensetzung kein chemisches Treibmittel oder sonst ein Mittel, welches zu einer Schäumung der Zusammensetzung führt.

Meist bevorzugt handelt es sich beim härtbaren Strukturklebstoff um eine einkomponentige, hitzehärtende Epoxidharzzusammensetzung.

Der Anteil des härtbaren Strukturklebstoffs beträgt vorzugsweise 50 bis 95 Gew.-%, insbesondere 65 bis 90 Gew.-%, bevorzugt 70 bis 80 Gew.-%, bezogen auf die gesamte Zusammensetzung.

Die erfindungsgemässe Zusammensetzung weist mindestens ein chemisch vernetztes Elastomer auf der Basis eines silanfunktionellen Polymers auf. Das chemisch vernetzte Elastomer liegt dabei bevorzugt als durchdringendes Polymernetzwerk im Strukturklebstoff vor.

Das chemisch vernetzte Elastomer auf der Basis eines silanfunktionellen Polymers wird dadurch in die Zusammensetzung eingebracht, dass ein silanfunktionelles Polymer mit dem härtbaren Strukturklebstoff vermischt und dann in der Mischung vernetzt wird, sodass insbesondere ein durchdringendes Polymernetzwerk im Strukturklebstoff entsteht.

Der Anteil des chemisch vernetzten Elastomers auf der Basis eines silanfunktionellen Polymers beträgt vorzugsweise 5 bis 50 Gew.-%, insbesondere 10 bis 35 Gew.-%, bevorzugt 20 bis 30 Gew.-%, bezogen auf die gesamte Zusammensetzung.

Als silanfunktionelles Polymer eignen sich dabei insbesondere ein silanfunktionelles Polymer **P**, welches typischerweise Endgruppen der Formel (V) aufweist.

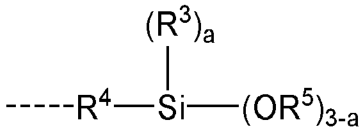

(V)

Dabei steht der Rest $R^3$ für einen linearen oder verzweigten, einwertigen Kohlenwasserstoffrest mit 1 bis 8 C-Atomen, insbesondere für eine Methyl- oder Ethylgruppe.

Der Rest $R^4$ steht für einen linearen oder verzweigten, zweiwertigen Kohlenwasserstoffrest mit 1 bis 12 C-Atomen, welcher gegebenenfalls cyclische und/oder aromatische Anteile, und gegebenenfalls ein oder mehrere Heteroatome, insbesondere ein oder mehrere Stickstoffatome, aufweist. Insbesondere steht $R^4$ für eine lineare oder verzweigte Alkylengruppe mit 1 bis 6 C-Atomen, bevorzugt für Methylen oder 1,3-Propylen, besonders bevorzugt für 1,3-Propylen.

Der Rest $R^5$ steht für einen Acylrest oder für einen linearen oder verzweigten, einwertigen Kohlenwasserstoffrest mit 1 bis 5 C-Atomen, insbesondere für eine Methyl-, Ethyl- oder Isopropylgruppe.

Der Index a steht für einen Wert von 0 oder 1 oder 2, insbesondere für einen Wert von 0.

Innerhalb einer Silangruppe der Formel (V) stehen $R^3$ und $R^5$ jeweils unabhängig voneinander für die beschriebenen Reste. So sind beispielsweise auch Verbindungen mit Endgruppen der Formel (V) möglich, welche Ethoxydimethoxysilan-Endgruppen ($R^5$ = Methyl, $R^5$ = Methyl, $R^5$ = Ethyl) sind.

In einer ersten Ausführungsform ist das silanfunktionelle Polymer **P ein** silanfunktionelles Polyurethanpolymer **P1**, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist. In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist insbesondere ein Mercaptosilan oder ein Aminosilan, bevorzugt ein Aminosilan.

Bevorzugt ist das Aminosilan ein Aminosilan **AS** der Formel (VI),

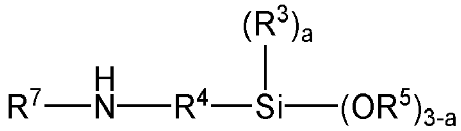

(VI)

wobei $R^3$, $R^4$, $R^5$ und a bereits vorhergehend beschrieben worden sind und $R^7$ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (VII) steht.

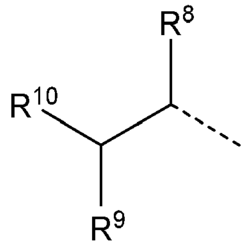

(VII)

Dabei stehen die Reste $R^8$ und $R^9$ jeweils unabhängig voneinander für ein Wasserstoffatom oder für einen Rest aus der Gruppe bestehend aus $-R^{11}$, -COOR" und -CN.

Der Rest $R^{10}$ steht für ein Wasserstoffatom oder für einen Rest aus der Gruppe bestehend aus $-CH_2-COOR^{11}$, $-COOR^{11}$, $-CONHR^{11}$, $-CON(R^{11})_2$, -CN, $-NO_2$, $-PO(OR^{11})_2$, $-SO_2R^{11}$ und $-SO_2OR^{11}$.

Der Rest $R^{11}$ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS**, bei denen $R^7$ in Formel (VI) verschieden von H ist. Bevorzugt sind die Michael-artigen Addukte, insbesondere N-(3-Trimethoxysilyl-propyl)-amino-bernsteinsäurediethyl-ester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden

können.

Diese genannten Polyole weisen bevorzugt ein mittleres Molekulargewicht von 250 bis 30'000 g/mol, insbesondere von 1000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Zur Einstellung der OH-Funktionalität der Polyole können einwertige Alkohole (Monoole) mitverwendet werden, beispielsweise Butanol, 2-Ethylhexanol oder ein Alkohol-gestartetes Polyoxyalkylenmonool.

Als Polyisocyanate für die Herstellung des Polyurethanpolymers können handelsübliche Polyisocyanate, insbesondere Diisocyanate, verwendet werden. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin-und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Polyisocyanate, sowie beliebige Mischungen der vorgenannten Polyisocyanate.

Besonders geeignete Polyisocyanate sind HDI, TMDI, IPDI, TDI sowie MDI, insbesondere IPDI.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal® von der Firma Bayer MaterialScience AG, Deutschland.

Das silanfunktionelle Polymer **P** ist in einer zweiten Ausführungsform ein silanfunktionelles Polyurethanpolymer **P2**, erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.

Als Isocyanatosilan **IS** geeignet sind Verbindungen der Formel (VIII).

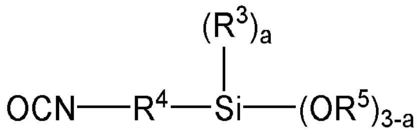

(VIII)

wobei $R^3$, $R^5$, $R^4$ und a bereits vorhergehend beschrieben wurden.

Beispiele für geeignete Isocyanatosilane **IS** der Formel (VIII) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannten Polyole, insbesondere hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 2000 bis 30'000 g/mol, insbesondere solche mit einem Molekulargewicht im Bereich von 4000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen IS der Formel (VIII). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+® 1010LM, 1015LM und 1050MM von der Firma Momentive Performance Materials Inc., USA, sowie unter den Handelsnamen Geniosil® STP-E15, STP-10 und STP-E35 von der Firma Wacker Chemie AG, Deutschland.

In einer dritten Ausführungsform ist das silanfunktionelle Polymer **P** ein silanfunktionelles Polymer **P3**, welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist.

Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.

Als silanfunktionelles Polymer **P** bevorzugt sind silanfunktionelle Polymere **P1** und silanfunktionelle Polyurethanpolymere **P3**.

Üblicherweise wird das silanfunktionelle Polymer **P** in einer Menge von 5 bis 50 Gew.-%, insbesondere in einer Menge von 10 bis 35 Gew.-%, bevorzugt 20 bis 30 Gew.-%, bezogen auf die gesamte Zusammensetzung, eingesetzt.

Die erfindungsgemässe Zusammensetzung ist typischerweise erhältlich durch

- Mischen von mindestens einem härtbaren Strukturklebstoff mit mindestens einem silanfunktionellen Polymer;
- Vernetzen des silanfunktionellen Polymers in der Mischung zu einem Elastomer, wobei das Vernetzen des silanfunktionellen Polymers insbesondere durch Reaktion der Silangruppen mit Wasser erfolgt.

Bei der Herstellung der erfindungsgemässen Zusammensetzung wird der härtbare Strukturklebstoff mit dem silanfunktionellen Polymer vermischt, vorzugsweise bis eine homogene Mischung erhalten wird. Umfasst der härtbare Strukturklebstoff als Epoxidharz **A** ein Epoxid-Festharz, erfolgt das Vermischen bei einer Temperatur über der Glasübergangstemperatur Tg des Epoxid-Festharzes.

Handelt es sich beim härtbaren Strukturklebstoff um eine hitzehärtende Epoxidharzzusammensetzung, kann diese vor der Zugabe des Härters **B** mit dem silanfunktionellen Polymer vermischt werden.

Dadurch kann die Temperatur beim Vermischen bis oder sogar über die Aushärtungstemperatur der hitzehärtenden Epoxidharzzusammensetzung eingestellt werden, ohne dass es zu einer Aushärtung des Strukturklebstoffs kommt. Bei höheren Temperaturen wird in der Regel eine effizientere Vermischung erreicht.

Nachdem eine insbesondere homogene Mischung erhalten wurde, erfolgt die Vernetzung des silanfunktionellen Polymers. Das dabei gebildete Elastomer liegt insbesondere als durchdringendes Polymernetzwerk im Strukturklebstoff vor.

Die Vernetzung des silanfunktionellen Polymers erfolgt dabei typischerweise durch Reaktion der Silangruppen mit Wasser.

Das Wasser für die Vernetzung des silanfunktionellen Polymers kann dabei auf verschiede Arten in die Zusammensetzung gelangen bzw. eingebracht werden. Einerseits kann die Zusammensetzung nach dem Mischen des härtbaren Strukturklebstoffs mit dem silanfunktionellen Polymer unter atmosphärischen Bedingungen stehen gelassen werden, sodass Wasser in Form von Luftfeuchtigkeit in die Zusammensetzung gelangt und zur Vernetzung des silanfunktionellen Polymers führt.

Andererseits kann der Zusammensetzung beim Mischen des härtbaren Strukturklebstoffs mit dem silanfunktionellen Polymer Wasser in freier oder gebundener Form zugegeben werden. In gebundener Form wird Wasser üblicherweise an ein Trägermaterial gebunden oder beispielsweise in Form einer wässrigen Kunststoffdispersion zugegeben.

Für die Vernetzung des silanfunktionellen Polymers mit Wasser enthält die Zusammensetzung insbesondere mindestens einen Katalysator. Derartige Katalysatoren sind insbesondere Organozinnverbindungen, beispielsweise

Dibutylzinndilaurat, Dioctylzinndilaurat, Dibutylzinndiacetylacetonat und Dioctylzinndiacetylacetonat; Titanate und Zirkonate, beispielsweise Tetraisobutoxytitanat und Diisobutoxytitan-bis-(ethylacetoacetat); Stickstoffverbindungen, insbesondere tertiäre Amine, beispielsweise N,N-Dimethylbenzylamin, N,N-Dimethylcyclohexylamin und 1,4-Diazabicyclo [2.2.2]octan, und Amidine und Guanidine, beispielsweise 1,8-Diazabicyclo[5.4.0]undec-7-en und 1,1,3,3-Tetramethylguanidin; sowie Mischungen der genannten Katalysatoren.

Wesentlich ist für die erfindungsgemässe Zusammensetzung, dass sie als Formgedächtnis-Material ausgebildet ist, welches eine möglichst hohe Formstabilität in der temporären Form und ein möglichst vollständiges Rückstellvermögen aufweist. Konkret bedeutet dies, dass sich die erfindungsgemässe Zusammensetzung für eine möglichst lange Zeitdauer, typischerweise für länger als 6 Monate, in der temporären Form zu halten vermag und dass sich die Zusammensetzung bei Bedarf, durch Erwärmen über die Glasübergangstemperatur Tg der Zusammensetzung, vollständig ihre ursprüngliche Form wieder annimmt. Ein genügendes Rückstellvermögen ist typischerweise gegeben, wenn ein Probekörper aus einer erfindungsgemässen Zusammensetzung mit einer Höhe im Bereich von 5 bis 10 mm in seiner Höhe um 50% verformt wird und bei Bedarf wieder auf 60 bis 100% der ursprünglichen Höhe zurückgestellt werden kann.

In einem weiteren Aspekt betrifft die vorliegende Erfindung einen Formkörper, welcher einer reversiblen Formgebung unterzogen wurde, wobei die Formgebung die Schritte umfasst:

- Erwärmen einer Zusammensetzung, wie sie vorhergehend beschrieben worden ist, auf eine Temperatur oberhalb ihrer Glasübergangstemperatur Tg;
- Verformen der Zusammensetzung, unter Spannung des chemisch vernetzten Elastomers auf der Basis eines silanfunktionellen Polymers;
- Abkühlen der verformten Zusammensetzung unter ihre Glasübergangstemperatur Tg.

Figur 1 zeigt schematisch die Herstellung eines erfindungsgemässen Formkörpers aus einer Zusammensetzung auf der Basis einer Epoxidharzzusammensetzung, wie sie vorhergehend beschrieben wurde.

Dabei liegt die feste Zusammensetzung 1 in ihrem Ausgangszustand Z1 in der ursprünglichen Form vor, in welcher sie beispielsweise bei ihrer Herstellung gebracht wurde. In einem ersten Schritt wird die Zusammensetzung dann um eine Temperatur $\Delta T_1$ auf eine Temperatur erwärmt, welche über ihrer Glasübergangstemperatur Tg liegt, jedoch, im Fall einer hitzehärtenden Epoxidharzzusammensetzung, unterhalb ihrer Aushärtungstemperatur. Befindet sich die Zusammensetzung in diesem Zustand Z2, wird sie unter Einwirkung einer Kraft F in ihre temporäre, noch verformbare Form 2 gebracht. In dieser temporären, noch verformbaren Form, wie sie in Zustand Z3 dargestellt ist, liegt das chemisch vernetzte Elastomer auf der Basis eines silanfunktionellen Polymers in gespannter Form vor. Die Zusammensetzung wird in dieser temporären Form gehalten und die Temperatur der Zusammensetzung wird wieder um die Temperatur $\Delta T_1$ auf eine Temperatur erniedrigt, welche unterhalb ihrer Glasübergangstemperatur Tg liegt. Dabei verfestigt sich die Zusammensetzung und liegt nun fest in ihrer temporären Form 3 vor, so wie es in Zustand Z4 gezeigt ist. In diesem Zustand als Formkörper ist die Zusammensetzung lagerstabil und kann weiter verarbeitet werden. So kann der Formkörper gestanzt oder geschnitten werden und/oder insbesondere an einem Träger angebracht oder in einem zu verstärkenden Hohlraum eines strukturellen Bauteils angeordnet werden.

Das Verformen der erfindungsgemässen Zusammensetzung, bei welcher sie in ihre temporäre Form gebracht wird, erfolgt typischerweise durch Pressen, Walzen, Ziehen und dergleichen. Wichtig ist beim Verformen, dass die Zusammensetzung im verformten Zustand auf eine Temperatur unterhalb ihrer Glasübergangstemperatur Tg abgekühlt werden kann, damit sie in ihrer temporären Form verbleibt.

In einem weiteren Aspekt betrifft die vorliegende Erfindung ein Verstärkungselement zur Verstärkung in Hohlräumen von strukturellen Bauteilen umfassend einen Träger, an welchem ein Formkörper gemäss vorhergehender Beschreibung angebracht ist.

Dieser Träger kann aus beliebigen Materialien bestehen. Insbesondere besteht der Träger aus einem aus einem Kunststoff, aus einem Metall oder aus einer Kombination von Kunststoff und Metall.

Bevorzugte Kunststoffe sind Polyurethane, Polyamide, Polyester und Polyolefine und Polyolefin-Copolymere, insbesondere hochtemperaturbeständige Polymere wie Poly(phenylenether), Polysulfone oder Polyethersulfone. Meist bevorzugte Kunststoffe sind Polyamide (PA) wie PA6 oder PA66, Polyethlyen und Polypropylen sowie Polystyrol und Copolymere wie Acrylnitril-Butadien-Styrol (ABS). Bevorzugte Metalle sind Aluminium, Stahl, Nickel und Legierungen dieser Metalle. Das Metall kann weiterhin unbehandelt vorliegen oder es kann mit geeigneten Mitteln, beispielsweise zur Verhinderung von Korrosion oder zur Verbesserung der Haftung vorbehandelt sein.

Der Träger kann weiterhin einen beliebigen Aufbau und eine beliebige Struktur aufweisen. Es kann beispielsweise massiv, hohl oder geschäumt sein oder eine gitterartige Struktur aufweisen. Die Oberfläche des Trägers kann typischerweise glatt, rau oder strukturiert sein.

Der Träger kann, zusätzlich zur seiner Funktion als Träger für die erfindungsgemässe Zusammensetzung bzw. dem aus ihr hergestellten Formteil, zur strukturellen Verstärkung oder zur Abdichtung des Bauteils oder auch zur Geräuschdämmung beitragen.

Der Träger kann weiterhin mindestens ein Befestigungsmittel, insbesondere einen Clip, zur Befestigung und Platzierung des Verstärkungselements in einem Hohlraum aufweisen. Die Befestigung des Verstärkungselements mit einem Clip eignet sich insbesondere für Anwendungen, bei welchen die gesamte Oberfläche des Bauteils, also auch die Hohlrauminnenwand, beispielsweise für eine Tauchlackierung erreichbar sein muss. In solchen Fällen ist eine Befestigung beispielsweise durch Verkleben nicht geeignet, da der Lack die Stelle der Verklebung nicht erreichen kann.

Meist bevorzugt besteht der Träger aus einem Kunststoff, welcher mit einem Metall beschichtet ist. Als Kunststoff und als Metall sind dabei die vorhergehend beschriebenen Materialien bevorzugt.

Das Metall, mit welchem der Kunststoff beschichtet ist, kann dabei auf beliebige Art und Weise am Kunststoff befestigt sein. Beispielsweise erfolgt die Befestigung durch mechanische Befestigungsmittel wie Nägel, Schrauben, Nieten, mechanischen Clips, Klemmen, Bördeln und dergleichen, oder durch Verkleben des Metalls mit dem Kunststoff. Weiterhin kann das Metall auch mittels Kunststoffgalvanisierung auf den Kunststoff aufgetragen worden sein. Meist bevorzugt beträgt die Schichtdicke der Metallschicht auf dem Kunststoffträger 0.03 bis 1.5 mm.

Der Träger aus Kunststoff, welcher mit einem Metall beschichtet ist, weist gegenüber einem reinen Metallträger den Vorteil auf, dass er einerseits leichter ist und dass er andererseits, durch die Eigenschaften des Kunststoffs wie die Wahl des Materials und dessen Verarbeitung, in seinen mechanischen Eigenschaften und in seiner Ausgestaltung sehr breit variiert werden kann. Der Vorteil der Metallbeschichtung gegenüber einem reinen Kunststoffträger ist, dass die Metalle in der Regel haftfreundlicher sind. Ein weiterer Vorteil der Metallbeschichtung ist, dass bei hitzehärtenden Strukturklebstoffen die Metallschicht sehr lokal und effizient durch Induktion erwärmt werden kann.

Figur 2 zeigt einen Träger 5 aus einem Kunststoff, welcher mit einem Metall 8 beschichtet ist. Das Metall ist dabei mit Nägeln 9 am Träger befestigt. Auf der Metallschicht befindet sich ein Formkörper 3, bestehend aus einer erfindungsgemässen Zusammensetzung in ihrem temporären Zustand.

Figur 3 zeigt schematisch ein Verstärkungselement, bestehend aus einem Träger 5, an welchem ein Formkörper 3 aus einer erfindungsgemässen Zusammensetzung mit hitzehärtender Epoxidharzzusammensetzung als Strukturklebstoff und chemisch vernetztem Elastomer auf der Basis eines silanfunktionellen Polymers in ihrer temporären Form, angebracht ist, in seinem Ausgangszustand Z4. In einem ersten Schritt wird der Formkörper 3 dann um eine Temperatur $\Delta T_1$ auf eine Temperatur erwärmt, welche über der Glasübergangstemperatur Tg der Zusammensetzung liegt, wobei sich das Elastomer auf der Basis eines silanfunktionellen Polymers entspannt und zu einer Verformung des Formkörpers bzw. der Zusammensetzung 1 in ihre ursprüngliche Form führt. Dies entspricht Zustand Z5 in Figur 3. Danach wird die Temperatur weiter um $\Delta T_2$ auf eine Temperatur erhöht, bei welcher die Zusammensetzung bzw. der härtbare Strukturklebstoff aushärtet. Die ausgehärtete Zusammensetzung 4 ist in Zustand Z6 gezeigt.

Die Temperaturerhöhung, welche zur Verformung des Formkörpers führt, und die Temperaturerhöhung zur Aushärtung des Strukturklebstoffs, müssen nicht zwingend zweistufig verlaufen. Es ist durchaus möglich, die beiden Schritte durch einen stetigen Temperaturanstieg nacheinander ablaufen zu lassen.

Weiterhin umfasst die Erfindung die Verwendung eines Verstärkungselements, wie es vorhergehend beschrieben wurde, zur Verstärkung in Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Verstärkungselements in Karosserien oder Rahmen von Automobilen, Lastkraftwagen, Eisenbahnwagen, Booten, Schiffen, Hubschraubern und Flugzeugen, meist bevorzugt in Automobilen.

Ein weiterer Aspekt der vorliegenden Erfindung betrifft ein Verfahren zur Verstärkung in Hohlräumen von strukturellen Bauteilen umfassend die Schritte:

- Platzieren eines Verstärkungselements gemäss vorhergehender Beschreibung in den Hohlraum eines strukturellen Bauteils;
- Erwärmen des Formkörpers 3 auf dem Verstärkungselement auf eine Temperatur oberhalb der Glasübergangstemperatur Tg der Zusammensetzung, wodurch der Formkörper in seine Form vor der Formgebung, also in die ursprüngliche Form, zurückgeht;
- Aushärten des härtbaren Strukturklebstoffs.

In einer Ausführungsform des beschriebenen Verfahrens zur Verstärkung in Hohlräumen von strukturellen Bauteilen, bei welchem die Massgabe gilt, dass der Träger des Verstärkungselements aus einem durch Induktion erwärmbaren Metall oder aus einem Material besteht, welcher mit einem durch Induktion erwärmbaren Metall beschichtet ist, und mit der Massgabe, dass der härtbare Strukturklebstoff eine hitzehärtender Strukturklebstoff ist, werden die Schritte b') und c') durch Induktion, das heisst durch ein elektromagnetisches Wechselfeld einer Induktionsspule, bewirkt.

Figur 4 zeigt analog zu Figur 3 schematisch die Verstärkung in einem Hohlraum eines strukturellen Bauteils 6, wobei im Inneren des strukturellen Bauteils ein Verstärkungselement, bestehend aus einem Träger 5 und mehreren Formkörpern 3 aus einer erfindungsgemässen Zusammensetzung mit hitzehärtendem Strukturklebstoff und chemisch vernetztem Elastomer auf der Basis eines silanfunktionellen Polymers in ihrer temporären Form, angebracht ist. Der

Träger des Verstärkungselements ist dabei mit einem Clip 7 am strukturellen Bauteil befestigt. Der Formkörper bzw. die Zusammensetzung liegt dabei in seiner temporären Form vor (Zustand Z4) und wird anschliessend um eine Temperatur $\Delta T_1$ auf eine Temperatur erwärmt, welche über der Glasübergangstemperatur Tg der Zusammensetzung liegt. Dabei entspannt sich das Elastomer auf der Basis eines silanfunktionellen Polymers und führt zu einer Verformung des Formkörpers bzw. der Zusammensetzung 1 in ihre ursprüngliche Form, wodurch der offen gelassene Spalt 10 zwischen Verstärkungselement und Hohlraum geschlossen wird und sich die erfindungsgemässe Zusammensetzung an die Hohlrauminnenwand haftet (Zustand Z5). Nach einer weiteren Temperaturerhöhung um eine Temperatur $\Delta T_2$ härtet der hitzehärtende Strukturklebstoff aus. Figur 4, Zustand Z6, zeigt das verstärkte strukturelle Bauteil mit der ausgehärteten Zusammensetzung 4.

Figur 5 zeigt ein Verstärkungselement, wie es in einem Hohlraum 10 eines strukturellen Bauteils 6 eingesetzt wird vor der Verformung des Formkörpers bzw. der erfindungsgemässen Zusammensetzung in ihrer temporären Form 3, welche sich auf einem Träger 5 befindet.

Figur 6 zeigt das Verstärkungselement aus Figur 5 wie es in einem Hohlraum eines strukturellen Bauteils 6 eingesetzt ist, wobei das Formteil bzw. die erfindungsgemässe Zusammensetzung in diesem Fall bereits in seine ursprüngliche Form zurückgegangen ist und an die Innenwände des strukturellen Bauteils 6 haftet. Weiterhin zeigt Figur 6 die ausgehärtete Zusammensetzung 4. Die Form und Struktur erfindungsgemässer Verstärkungselemente kann gemäss ihrem Einsatzort beliebig gewählt werden.

Weiterhin betrifft die vorliegende Erfindung eine gehärtete Zusammensetzung, wie sie durch einen Härtungsvorgang, insbesondere durch Hitzehärtung, aus einer vorhergehend beschriebenen Zusammensetzung erhältlich ist.

**Beispiele**

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

<u>Testverfahren</u>

Die **Formstabilität** des Materials in der temporären Form wurde während 7 Tagen bei Normklima (23°C / 50% Luftfeuchtigkeit) ("*Relaxation*"), das **Rückstellvermögen** zur ursprünglichen Form nach 7 Tagen Lagerung bei Normklima bestimmt. Die Dimensionen der ursprünglichen Form der Probekörper misst 10x10x6 mm (LxBxH). Die Höhe in ursprünglicher Form ($H_0$) betrug also 6 mm. Durch Pressen bei erhöhter Temperatur und anschliessendem Abkühlen wurden die Probekörper in die temporäre Form mit einer Höhe von 3 mm gebracht ($H_{Temp}$), was einer Kompression von 50 % entspricht und somit beim Rückstellvorgang einen Höhengewinn von 100 % erlaubt.

Die Relaxation ist hier definiert als:

$$Relaxation\ [\%] = \frac{H_{Temp}(Tag\ 7) - H_{Temp}(Tag\ 0)}{H_{Temp}(Tag\ 0)} \cdot 100$$

Das Rückstellvermögen ist bestimmt als:

$$Rückstellvermögen\ [\%] = \frac{H_0(Tag\ 7,\ nach\ Aushärtung) - H_{Temp}(Tag\ 7)}{H_0(Tag\ 0) - H_{Temp}(Tag0)} \cdot 100$$

<u>Herstellung von N-(3-Trimethoxysilyl-propyl)-amino-bernsteinsäurediethylester</u>

Zu 179 g (1 mol) 3-Aminopropyl-trimethoxysilan (Silquest® A-1110 von Momentive Performance Materials) wurden unter Feuchtigkeitsausschluss 172 g (1 mol) Maleinsäurediethylester unter gutem Rühren langsam zugetropft und anschliessend 2 Stunden weitergerührt. Es wurde eine farblose Flüssigkeit mit einer Viskosität bei 20°C von 60 mPa·s erhalten.

<u>Herstellung von silanfunktionellem Polymer ***P1***</u>

Unter Feuchtigkeitsausschluss wurden 1000 g Polyol Acclaim® 12200 (von Bayer; low monol Polyoxypropylendiol, OH-Zahl 11.0 mg KOH/g, Wassergehalt ca. 0.02 Gew.-%), 43.6 g Isophorondiisocyanat (Vestanat® IPDI von

Degussa) und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.7 Gew.-% erreicht hatte. Anschliessend wurden 62.3 g N-(3-Trimethoxysilyl-propyl)-amino-bernstein-säurediethylester eingemischt und die Mischung bei 90°C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

Herstellung der Probekörper

Die Formulierungen ***1*** bis ***7*** wurden durch Vermischen der Bestandteile gemäss Tabelle 1 in den entsprechenden Gewichtsprozenten mittels corotierendem Doppelschneckenextruder bei 90°C Schmelztemperatur hergestellt.

Die so hergestellten Formulierungen wurden anschliessend zu Platten von 6 mm Dicke verarbeitet. Anschliessend wurde das jeweilige silanfunktionelle Polymer während mindestens 1 Woche bei Raumtemperatur und 50% Luftfeuchtigkeit chemisch vernetzt. Probekörper in ihrer ursprünglichen Form mit der Abmessung 10x10x6 mm wurden anschliessend aus den Platten geschnitten.

Tabelle 1 Formulierung ***1*** bis ***7*** in Gew.-% sowie Resultate;

| | ***1*** | ***2*** | ***3*** | ***4*** | ***5*** | ***6*** | ***7*** |
|---|---|---|---|---|---|---|---|
| Araldite® GT 7004 [a)] | 62.9 | 46.7 | 62.9 | 46.7 | 60.4 | 50.3 | 46.7 |
| Dicyandiamid | 1.4 | 1.1 | 1.4 | 1.1 | 1.4 | 1.1 | 1.1 |
| MS S203H [b)] | 31.5 | 46.8 | | | | | |
| MS S303H [b)] | | | 31.5 | 46.8 | | | |
| SAX 260 [b)] | | | | | 30.1 | 40.1 | |
| ***P1*** | | | | | | | 46.8 |
| Metatin® K740 [c)] | 1.13 | 1.13 | 1.13 | 1.13 | 1.13 | 1.13 | 1.13 |
| DBU [d)] | 0.57 | 0.57 | 0.57 | 0.57 | 0.57 | 0.57 | 0.57 |
| Purmol® 13 [e)] | 1.6 | 2.3 | 1.6 | 2.3 | 1.6 | 2 | 2.3 |
| Aerosil® [f)] | 0.9 | 1.4 | 0.9 | 1.4 | | | 1.4 |
| HDK® H18 [f)] | | | | | 4.8 | 4.8 | |
| Relaxation [%] | 0 | 0 | 0 | 0 | 0 | 0 | 0 |
| Rückstellvermögen [%] | 97 | 98 | 67 | 95 | 65 | 71 | 95 |

[a)] erhältlich von Huntsman Advanced Materials;
[b)] erhältlich von Kaneka Corp.;
[c)] 10 %-ige Lösung in DIDP, erhältlich von Rohm&Haas;
[d)] 1,8-Diazabicyclo[5.4.0]undec-7-en, 50% in DIDP, erhältlich von Fluka;
[e)] erhältlich von Zeochem AG;
[f)] pyrogene Kieselsäure, erhältlich von Wacker Chemie AG.

**Bezugszeichenliste**

1 Zusammensetzung in der ursprünglichen Form

2 Zusammensetzung (verformbar)

3 Formkörper (temporäre Form)

4 Ausgehärtete Zusammensetzung

5 Träger

6 strukturelles Bauteil

7 Clip

8 Metallschicht

9 Nagel

10 Spalt

Z1 Zustand der Zusammensetzung in ursprünglicher Form

Z2 Zustand der verformbaren Zusammensetzung

Z3 Zustand der Zusammensetzung im temporären Zustand (Formkörper)

Z4 Zustand der ausgehärteten Zusammensetzung

$\Delta T_1$ Temperaturunterschied zwischen Temperatur unterhalb von Tg der Zusammensetzung und Temperatur oberhalb des Tg der Zusammensetzung

$\Delta T_2$ Temperaturunterschied zwischen Temperatur oberhalb von Tg der Zusammensetzung und der Aushärtungstemperatur der Zusammensetzung

**Patentansprüche**

**1.** Zusammensetzung umfassend

- mindestens einen härtbaren Strukturklebstoff; sowie
- mindestens ein chemisch vernetztes Elastomer auf der Basis eines silanfunktionellen Polymers.

**2.** Zusammensetzung gemäss Anspruch 1, **dadurch gekennzeichnet, dass** das chemisch vernetzte Elastomer als durchdringendes Polymernetzwerk im Strukturklebstoff vorliegt.

**3.** Zusammensetzung gemäss einem der Ansprüche 1 oder 2, **dadurch gekennzeichnet, dass** das silanfunktionelle Polymer erhältlich ist

- durch die Umsetzung eines Silans, welches mindestens eine gegenüber Isocyanatgruppen reaktive Gruppe aufweist, mit einem Polyurethanpolymer, welches Isocyanatgruppen aufweist;
- durch die Umsetzung eines Isocyanatosilans mit einem Polymer, welches gegenüber Isocyanatgruppen reaktive funktionelle Endgruppen aufweist; oder
- durch eine Hydrosilylierungsreaktion von Polymeren mit endständigen Doppelbindungen.

**4.** Zusammensetzung gemäss einem der vorhergehenden Ansprüche, **dadurch gekennzeichnet, dass** der härtbare Strukturklebstoff eine hitzehärtende Epoxidharzzusammensetzung, umfassend mindestens ein Epoxidharz **A** und mindestens einen Härter **B** für Epoxidharze, welcher durch erhöhte Temperatur aktiviert wird, ist.

**5.** Zusammensetzung gemäss einem der vorhergehenden Ansprüche, erhältlich durch

- Mischen von mindestens einem härtbaren Strukturklebstoff mit mindestens einem silanfunktionellen Polymer;
- Vernetzen des silanfunktionellen Polymers in der Mischung zu einem Elastomer.

**6.** Zusammensetzung gemäss Anspruch 5, **dadurch gekennzeichnet, dass** das Vernetzen des silanfunktionellen Polymers durch Reaktion der Silangruppen mit Wasser erfolgt.

**7.** Zusammensetzung gemäss einem der vorhergehenden Ansprüche, **dadurch gekennzeichnet, dass** der Anteil an härtbarem Strukturklebstoff 50 bis 95 Gew.-% und der Anteil chemisch vernetztem Elastomer auf der Basis eines

silanfunktionellen Polymers 5 bis 50 Gew.-% beträgt, jeweils bezogen auf die gesamte Zusammensetzung.

**8.** Verfahren zur Herstellung einer Zusammensetzung gemäss Anspruch 1 umfassend die Schritte:

- Mischen des härtbaren Strukturklebstoffs mit einem silanfunktionellen Polymer; und
- Vernetzen des silanfunktionellen Polymers in der Mischung zu einem Elastomer.

**9.** Verfahren gemäss Anspruch 8, **dadurch gekennzeichnet, dass** das Vernetzen des silanfunktionellen Polymers durch Reaktion der Silangruppen mit Wasser erfolgt.

**10.** Formkörper (3), **dadurch gekennzeichnet, dass** er einer reversiblen Formgebung unterzogen wurde, wobei die Formgebung die Schritte umfasst

- Erwärmen einer Zusammensetzung gemäss einem der Ansprüche 1 bis 7 auf eine Temperatur oberhalb ihrer Glasübergangstemperatur Tg;
- Verformen der Zusammensetzung, unter Spannung des chemisch vernetzen Elastomers auf Basis eines silanfunktionellen Polymers;
- Abkühlen der verformten Zusammensetzung unter ihre Glasübergangstemperatur Tg.

**11.** Verstärkungselement zur Verstärkung in Hohlräumen von strukturellen Bauteilen umfassend einen Träger (5), an welchem ein Formkörper (3) gemäss Anspruch 10 angebracht ist.

**12.** Verstärkungselement gemäss Anspruch 11, **dadurch gekennzeichnet, dass** der Träger (5) aus einem Kunststoff besteht, welcher mit einem Metall beschichtet ist.

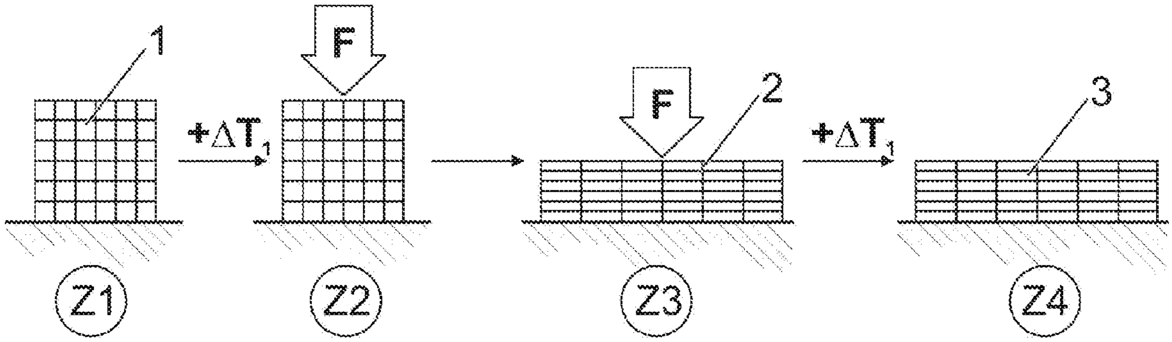


Figur 1

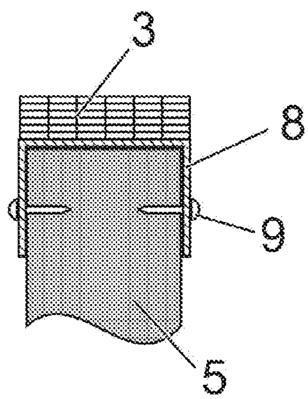


Figur 2

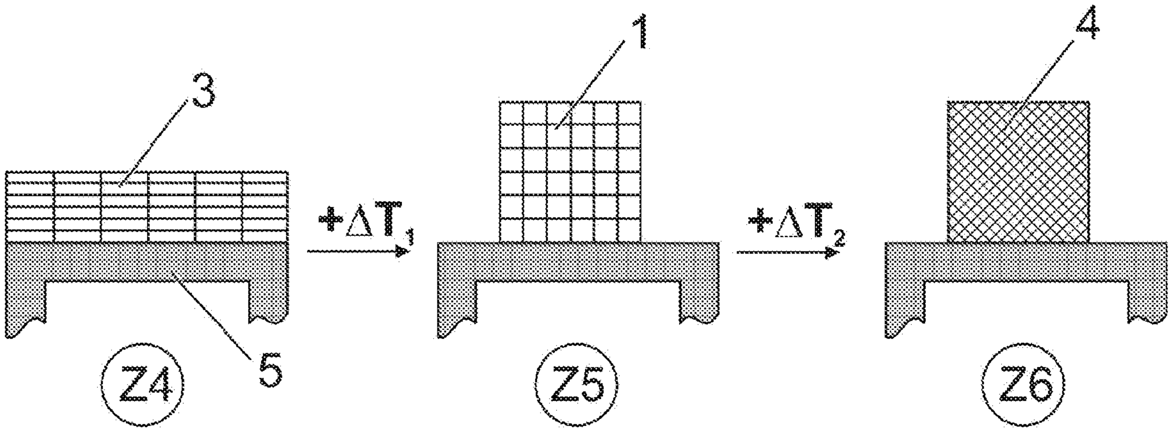


Figur 3

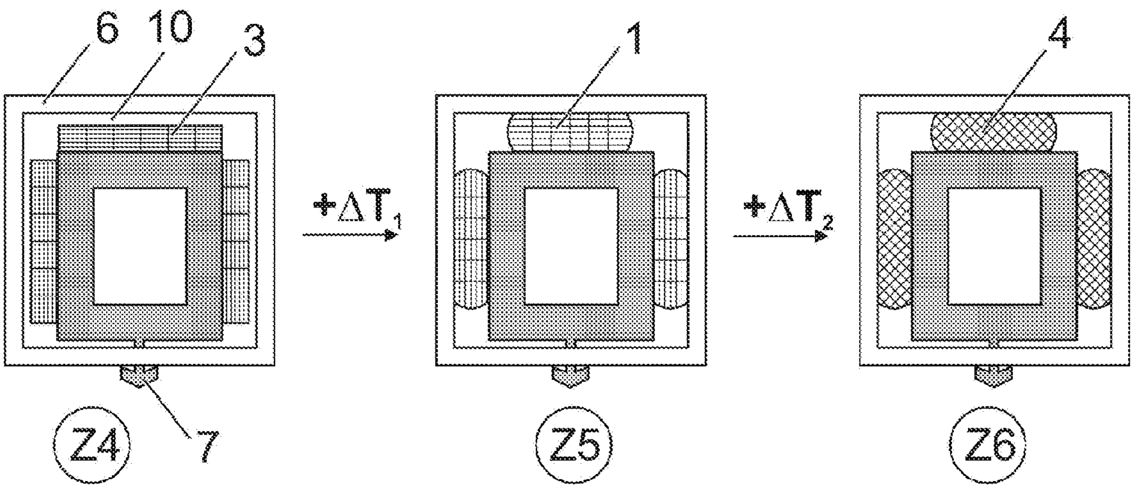


Figur 4

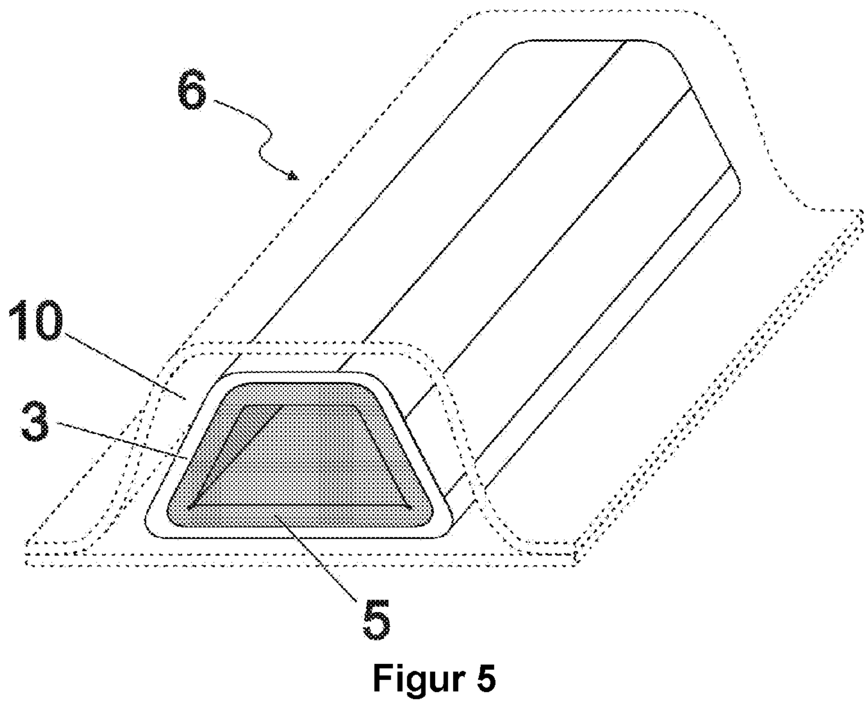


Figur 5

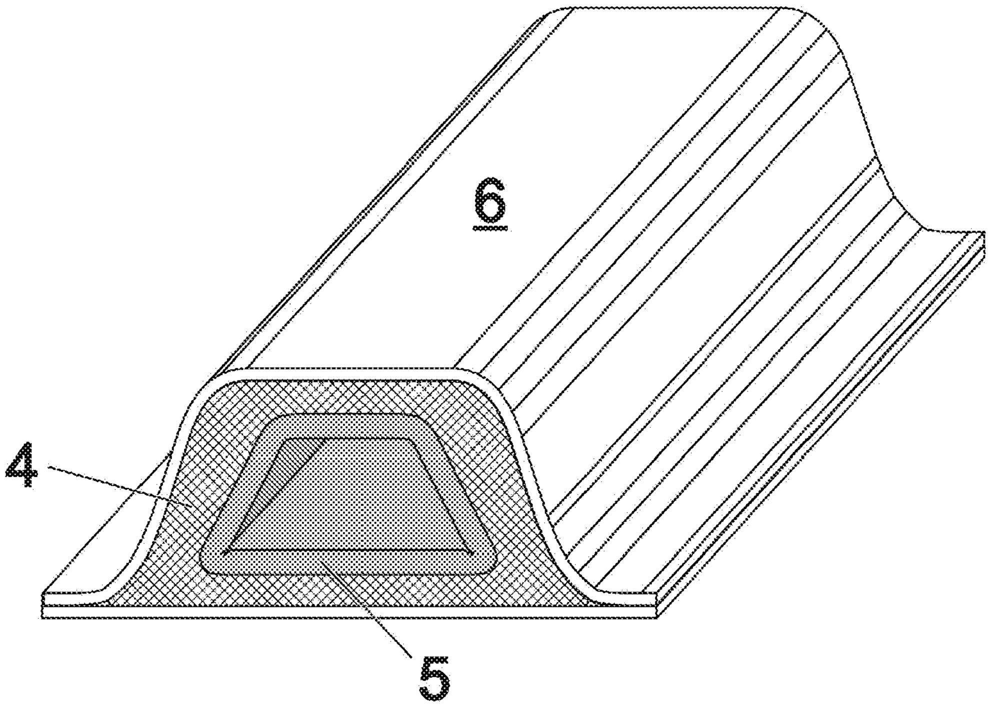


Figur 6

Europäisches Patentamt
European Patent Office
Office européen des brevets

# EUROPÄISCHER RECHERCHENBERICHT

Nummer der Anmeldung
EP 11 18 1294

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 380 625 A1 (KONISHI CO LTD [JP]; ISHIZAKI HONTEN CO LTD [JP]) 14. Januar 2004 (2004-01-14) * Absatz [0012] * * Absatz [0015] * * Absatz [0021] * * Absatz [0072] - Absatz [0074] * * Absatz [0092] * * Absatz [0095]; Beispiele 1, 2; Tabelle 1 * * Absatz [0102]; Beispiele 3, 4; Tabelle 2 * * Ansprüche 1-3 * ----- | 1-9 | INV. C08J3/24 C09J163/00 C09J9/00 ADD. C08L101/10 |
| X | EP 2 019 027 A1 (SIKA TECHNOLOGY AG [CH]) 28. Januar 2009 (2009-01-28) * Absatz [0004] * * Absatz [0018] * * Absatz [0025] - Absatz [0033] * * Absatz [0044] - Absatz [0045] * * Abbildung 7 * * Ansprüche 1, 4, 6, 9 - 13 * ----- | 1-12 | |
| | | | RECHERCHIERTE SACHGEBIETE (IPC) |
| A | DE 10 2009 035621 A1 (GM GLOBAL TECH OPERATIONS INC [US]) 11. März 2010 (2010-03-11) * Abbildung 2 und 4 * * Ansprüche 1, 3, 4, 9 * ----- | 1-12 | C08J C09J B29C |
| A | DE 10 2009 035595 A1 (GM GLOBAL TECH OPERATIONS INC [US]) 11. Februar 2010 (2010-02-11) * Absatz [0012] - Absatz [0013] * * Anspruch 1 * ----- -/-- | 1-12 | |

Der vorliegende Recherchenbericht wurde für alle Patentansprüche erstellt

| Recherchenort | Abschlußdatum der Recherche | Prüfer |
|---|---|---|
| München | 10. Februar 2012 | Siemsen, Beatrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

1

EPO FORM 1503 03.82 (P04C03)

Europäisches Patentamt
European Patent Office
Office européen des brevets

# EUROPÄISCHER RECHERCHENBERICHT

Nummer der Anmeldung
EP 11 18 1294

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | DE 10 2009 045903 A1 (HENKEL AG & CO KGAA [DE]) 28. April 2011 (2011-04-28)<br>* Absatz [0006] *<br>* Absatz [0008] *<br>* Absatz [0019] *<br>* Absatz [0029] *<br>* Absatz [0040] *<br>----- | 1-12 | |
| | | | RECHERCHIERTE SACHGEBIETE (IPC) |

1

Der vorliegende Recherchenbericht wurde für alle Patentansprüche erstellt

| Recherchenort | Abschlußdatum der Recherche | Prüfer |
|---|---|---|
| München | 10. Februar 2012 | Siemsen, Beatrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 11 18 1294

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2012

| Im Recherchenbericht angeführtes Patentdokument | Datum der Veröffentlichung | Mitglied(er) der Patentfamilie | Datum der Veröffentlichung |
|---|---|---|---|
| EP 1380625 A1 | 14-01-2004 | CN 1496394 A | 12-05-2004 |
| | | EP 1380625 A1 | 14-01-2004 |
| | | JP 2002265922 A | 18-09-2002 |
| | | US 2004092640 A1 | 13-05-2004 |
| | | WO 02072724 A1 | 19-09-2002 |
| EP 2019027 A1 | 28-01-2009 | EP 2019027 A1 | 28-01-2009 |
| | | EP 2183150 A1 | 12-05-2010 |
| | | WO 2009016106 A1 | 05-02-2009 |
| DE 102009035621 A1 | 11-03-2010 | KEINE | |
| DE 102009035595 A1 | 11-02-2010 | DE 102009035595 A1 | 11-02-2010 |
| | | US 2010035049 A1 | 11-02-2010 |
| DE 102009045903 A1 | 28-04-2011 | DE 102009045903 A1 | 28-04-2011 |
| | | WO 2011048022 A2 | 28-04-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 08168009 A
- US 6322890 B
- US 3971751 A
- US 6207766 B


### In der Beschreibung aufgeführte Nicht-Patentliteratur


- Semi-interpenetrierenden Polymernetzwerks. semi-interpenetrating polymer network (SIPN)) gemäss IUPAC Compendium of Chemical Terminology. 1997